(19) Europäisches Patentamt
European Patent Office
Office européen des brevets

(11) **EP 4 598 224 A1**

(12) **EUROPEAN PATENT APPLICATION**
published in accordance with Art. 153(4) EPC

(43) Date of publication:
**06.08.2025 Bulletin 2025/32**

(21) Application number: **23872903.2**

(22) Date of filing: **18.09.2023**

(51) International Patent Classification (IPC):
*H04W 72/232* (2023.01)    *H04L 27/26* (2006.01)
*H04L 5/00* (2006.01)    *H04W 72/23* (2023.01)

(52) Cooperative Patent Classification (CPC):
H04L 5/00; H04L 27/26; H04W 72/23;
H04W 72/232

(86) International application number:
**PCT/KR2023/014034**

(87) International publication number:
**WO 2024/071785 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 26.09.2022  KR 20220121944
30.09.2022  KR 20220125611
14.02.2023  KR 20230019657

(71) Applicant: **LG Electronics Inc.**
**Yeongdeungpo-gu**
**Seoul 07336 (KR)**

(72) Inventors:
• **SHIN, Seokmin**
**Seoul 06772 (KR)**
• **KIM, Seonwook**
**Seoul 06772 (KR)**
• **KIM, Kijun**
**Seoul 06772 (KR)**
• **KO, Hyunsoo**
**Seoul 06772 (KR)**
• **YANG, Suckchel**
**Seoul 06772 (KR)**
• **PARK, Haewook**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **DEVICE AND METHOD FOR DYNAMIC WAVEFORM SWITCHING IN WIRELESS COMMUNICATION SYSTEM**

(57)    A method of operating a user equipment (UE) in a wireless communication system is provided. The method includes receiving, from a base station (BS), downlink control information (DCI) related to a dynamic indication for one waveform of a first waveform or a second waveform, based on a first bit-width for the first waveform and a second bit-width for the second waveform being different for each field within the DCI, determining a bit-width of each field as a maximum value of the first bit-width and the second bit-width; based on the first waveform being indicated by the DCI and the second bit-width being determined for each field, decoding only least significant bits (LSBs) of a number corresponding to the first bit-width for each field, and performing an uplink transmission based on the determined waveform.

[FIG. 7]

**Description**

[Technical Field]

The present disclosure relates to a wireless communication system. More particularly, the present disclosure relates to a device and method for performing a dynamic waveform switching in a wireless communication system.

[Background Art]

As more and more communication devices require larger communication capacity, there is a need for enhanced mobile broadband communication compared to the existing radio access technology. Massive machine type communications (MTC) which provide various services anytime and anywhere by connecting many devices and objects are also one of the major issues to be considered in next-generation communications. In addition, a communication system design considering services/UE sensitive to reliability and latency is also being discussed. As above, the introduction of next generation radio access technology considering enhanced mobile broadband communication, massive MTC, ultra-reliable and low latency communication (URLLC), etc. is discussed, and the technology is called NR for convenience in the present disclosure.

[Disclosure]

[Technical Problem]

In order to solve the above-described and other problems, the present disclosure provides a device and method for performing a dynamic waveform switching in a wireless communication system.
The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

In order to solve the above-described and other problems, the present disclosure provides a device and method for performing a dynamic waveform switching in a wireless communication system.
The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Advantageous Effects]

In order to solve the above-described and other problems, the present disclosure can provide a device and method for performing a dynamic waveform switching in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.
FIG. 2 illustrates an example of a structure of a radio frame used in a system applicable to the present disclosure.
FIG. 3 illustrates an example of a slot structure used in a system applicable to the present disclosure.
FIG. 4 illustrates an example of a slot structure of a radio frame used in a system applicable to the present disclosure.
FIG. 5 illustrates an example of an operation process of a UE in a system applicable to the present disclosure.
FIG. 6 illustrates an example of an operation process of a base station in a system applicable to the present disclosure.
FIG. 7 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.


## General Signal Transmission Method in 3GPP

## Physical Channels and General Signal Transmission

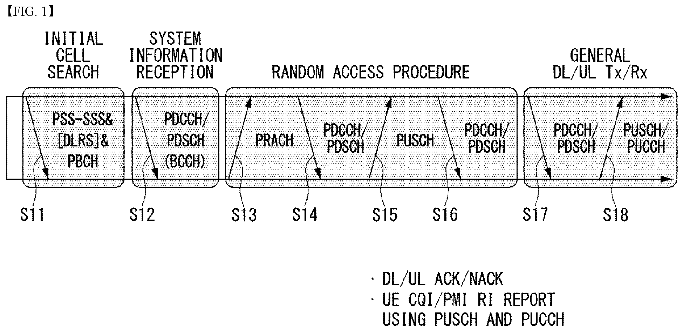

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

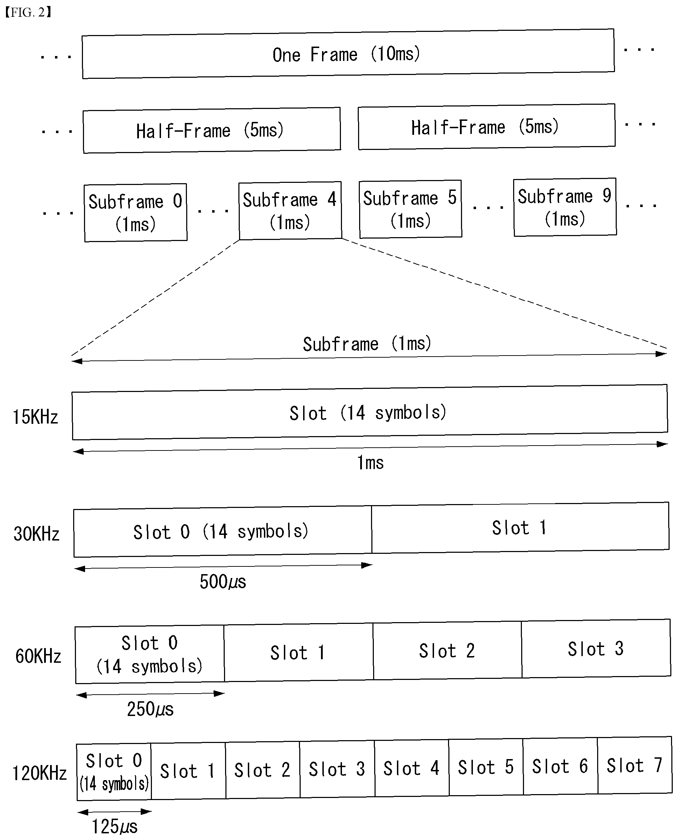

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

[Table 1]

| SCS ($15*2^u$) | $N^{slot}_{syrnb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.

Table 2 shows that when the extended CP is used, the number of symbols per slot, the number of slots per frame, and the number of slots per subframe vary depending on the SCS.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1

EP 4 598 224 A1

may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

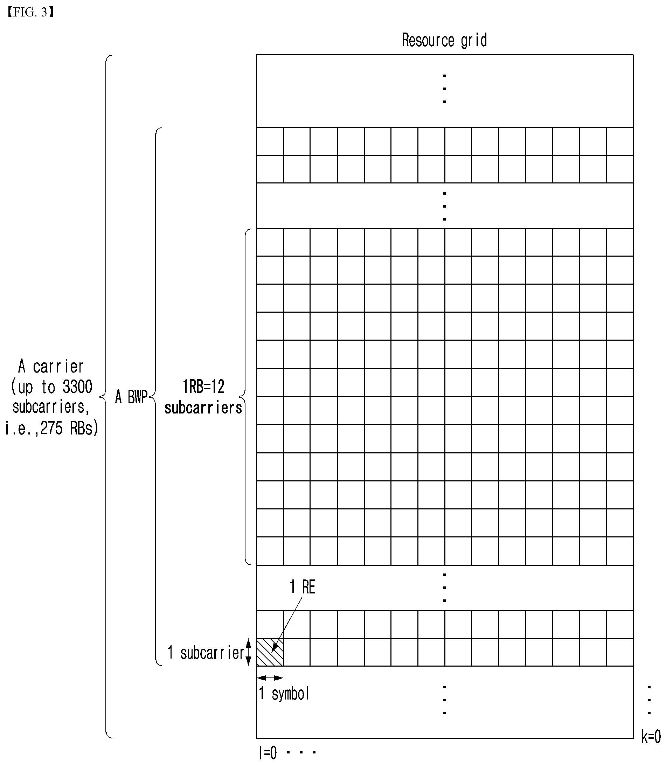

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

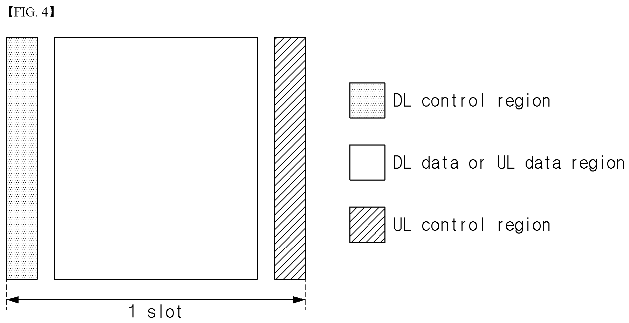

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

Composition and Method of the Invention

Currently, in NR, it is defined that the base station indicates which waveform to be used among CP-OFDM and DFT-s-OFDM via RRC signaling (e.g., SIB1, UE specific RRC signaling, etc.).

To explain in more detail what is defined in 3GPP TS 38.331, in the 4-step RACH procedure, a waveform of Msg. 3 PUSCH is defined to use DFT-s-OFDM as an UL waveform if "msg3-transformPrecoder" is set to enable, and to use CP-OFDM as the UL waveform if the "msg3-transformPrecoder" parameter field is empty. In the 2-step RACH procedure, a waveform of Msg. A PUSCH is defined to use DFT-s-OFDM if "msgA-TransformPrecoder" is set to enable, and to use CP-OFDM if it is set to disable.

Finally, waveforms of other UL channels (e.g., normal PUSCH, configured PUSCH, etc.) except for the Msg. 3 PUSCH and the Msg. A PUSCH are defined to use DFT-s-OFDM if "transformPrecoder" is set to enable, and to use CP-OFDM if it is set to disable. Additionally, if the parameter "transformPrecoder" is not indicated separately, it is defined to follow the configuration of "msg3-transformPrecoder".

In the present disclosure, the expression that the base station configures/indicates the UL waveform to CP-OFDM means that values of "msg3-transformPrecoder" and/or "msgA-TransformPrecoder" and/or "transformPrecoder", which are parameters transmitted via RRC signaling (e.g., SIB1, UE specific RRC signaling, etc.), have been set to disable, and also means that the "transformPrecoder" value, which can be newly defined in DCI format 0_0, 0_1, 0_2, etc. (or can be used by reinterpreting an existing field by the UE), has been set to disable. On the other hand, the expression that the base station configures/indicates the UL waveform to DFT-s-OFDM means that values of "msg3-transformPrecoder" and/or "msgA-TransformPrecoder" and/or "transformPrecoder", which are parameters transmitted via RRC signaling (e.g., SIB1, UE specific RRC signaling, etc.), have been set to enable, and also means that the "transformPrecoder" value, which can be newly defined in DCI format 0_0, 0_1, 0_2, etc. (or can be used by reinterpreting the existing field by the UE), has been set to enable.

A method of configuring/indicating a waveform via DCI when a dynamic waveform switching method is introduced may be considered, and proposed methods for DCI design details that can be newly considered based on the method are proposed in the present disclosure.

## Method to consider when dynamically **configuring a waveform through a specific DCI field**

A base station may use DCI format 0_0, 0_1, 0_2 for scheduling a PUSCH to configure/indicate a dynamic waveform switching of the PUSCH. Characteristically, a new field may be created in the DCI and used for the purpose of configuring/indicating the dynamic waveform switching. However, since there may not be many reserved fields in the DCI, it may be configured that a specific DCI field previously used for another purpose is reinterpreted for the purpose of configuring/indicating the dynamic waveform switching.

For example, it may be configured that most significant bit (MSB) (or least significant bit (LSB)) N bit (e.g., N=1) of a time domain resource assignment (TDRA) field, and/or a modulation and coding scheme (MCS) field, and/or a new data indicator field, and/or a redundancy version field, and/or a HARQ process number field, etc. is used to configure/indicate the dynamic waveform switching.

Additionally, if the waveform is dynamically configured/indicated to be either CP-OFDM or DFT-s-OFDM through a specific location of a specific DCI field as described above, the following UE operation may be additionally considered.

First, depending on a type of a UL waveform that the base station dynamically configures/indicates through a specific DCI field, a set of values indicated by the specific DCI field or a table referred to by the values indicated by the specific DCI field may be set/defined differently. For example, if the UL waveform is configured/indicated as CP-OFDM, a table referred to by a MCS field may be Table X, and if the UL waveform is configured/indicated as DFT-s-OFDM, the table referred to by the MCS field may be Table Y. For another example, a set of beta offset values and/or a set of power control parameters may be independently set/defined as value/table to be referred for each waveform. Alternatively, while a beta offset value may be dynamically indicated via DCI in a specific waveform 1 as described above, a semi-static beta offset may be configured/applied to be used in another waveform 2 without a dynamic indication (i.e., 0 bit in DCI). For another example, a scaling factor (i.e., Alpha, $\alpha$) that determines the maximum number of REs allowed for UCI mapping among the total number of REs in PUSCH (e.g., Alpha value applied to Equation determining the number of UCI REs including the following Equation 1 included in TS 38.212 Section 6.3.2.4) may also be independently set/defined as values/tables to be referred for each waveform. Equation 1 is alpha related formula included in 3GPP TS 38.212 Section 6.3.2.4.

【Equation 1】

$$
Q'_{\mathrm{ACK}} = \min\left\{ \left\lceil \frac{\left(O_{\mathrm{ACK}} + L_{\mathrm{ACK}}\right) \cdot \beta_{\mathrm{offset}}^{\mathrm{PUSCH}} \cdot \sum_{l=0}^{N_{\mathrm{symb,all}}^{\mathrm{PUSCH}}-1} M_{\mathrm{sc}}^{\mathrm{UCI}}(l)}{\sum_{r=0}^{C_{\mathrm{UL-SCH}}-1} K_r} \right\rceil, \left\lceil \alpha \cdot \sum_{l=l_0}^{N_{\mathrm{symb,all}}^{\mathrm{PUSCH}}-1} M_{\mathrm{sc}}^{\mathrm{UCI}}(l) \right\rceil \right\}
$$

In this case, when the UL waveform is dynamically configured/indicated through a specific DCI field A (e.g., HARQ process number field, etc.), the UE may be configured to interpret by referring to the value/table set for the corresponding UL waveform value when interpreting a specific DCI field B (e.g., MCS field, etc.) based on the configured/indicated UL waveform value.

For another example, based on whether the UL waveform is DFT-s-OFDM or CP-OFDM, a combination of information indicated by a TDRA field value may be configured to vary. That is, a combination of {k2, mapping Type, startSymbolAndLength} indicated by the TDRA field value may vary depending on a DMRS structure suitable for different UL waveforms. Accordingly, if the UL waveform is DFT-s-OFDM, it may be configured to refer to Table X including a combination of information suitable for it, and if the UL waveform is CP-OFDM, it may be configured to refer to Table Y including a combination of information suitable for it.

Second, depending on a type of a UL waveform that the base station dynamically configures/indicates through a specific DCI field, the specific DCI field may be configured to be different. For example, if the UL waveform is configured/indicated as CP-OFDM, a MCS field may include X bits (e.g., X=5), and if the UL waveform is configured/indicated as DFT-s-OFDM, the MCS field may include Y bits (e.g., Y=4). Alternatively, if the UL waveform is configured/indicated as CP-OFDM, a HARQ process number field may include X bit (e.g., X=4), and if the UL waveform is configured/indicated as DFT-s-OFDM, the HARQ process number field may include Y bit (e.g., Y=2). In this case, when the UL waveform is dynamically configured/indicated through a specific DCI field A (e.g., HARQ process number field, etc.), the UE may be configured to interpret using a predefined DCI field size based on the corresponding UL waveform value when interpreting a specific DCI field B (e.g., MCS field, etc.) based on the configured/indicated UL waveform value.

In addition, the following DCI fields may also have different field configurations (e.g., field bit-width) depending on the UL waveform configured/indicated by the base station.

(1) SRI related: SRS resource set indicator and/or Second SRS resource indicator

(1-1) Even if the UL waveform configured/indicated by the base station varies, it is possible to consider a method of equally setting a bit-width of the field through restrictions, such as configuring/indicating to use either a non-codebook (NCB) based transmission or a codebook (CB) based transmission, or commonly configuring/indicating the number of SRS resources, or commonly configuring/indicating the number of max ranks.

(1-2) Alternatively, if the bit-width of the field varies for each UL waveform, it may be configured so that the bit-width of the field is determined as a maximum value among possible bit-widths.

(2) Transmit Precoding Matrix Indicator (TPMI) and Transmit Rank Indicator (TRI) related: Precoding information and number of layers & Second Precoding information

(2-1) If the bit-width of the field varies for each UL waveform, it may be configured so that the bit-width of the field is determined as a maximum value among possible bit-widths.

(3) Antenna ports field

(3-1) If the bit-width of the field varies for each UL waveform, it may be configured so that the bit-width of the field is determined as a maximum value among possible bit-widths.

(4) DMRS sequence initialization field

(4-1) When a method of configuring a waveform via existing higher layer signaling is applied, a field size is set to 0 bit if the waveform is configured as DFT-s-OFDM, and the field size is set to 1 bit if the waveform is configured as CP-OFDM. In addition, if dynamic waveform switching is configured, it may be configured so that the field size is always fixed to 1 bit, and it may be configured so that the UE determine whether or not to interpret the 1 bit based on the UL waveform that is actually dynamically configured/indicated. In other words, if the base station dynamically configures the UL waveform as DFT-s-OFDM, the UE may be configured to ignore the 1 bit field, and if the base station dynamically configures the UL waveform as CP-OFDM, the UE may be configured to interpret the 1 bit field without ignoring the 1 bit field.

(4-2) Alternatively, if the dynamic waveform switching is configured, it may be configured so that the field size is always fixed to 0 bit, an initialization method for a case where the base station dynamically configures the UL waveform as CP-OFDM may be configured/indicated via higher layer signaling, and the field size may be pre-fixed to a specific one value of 0 and 1.

(5) PTRS-DMRS related (PTRS-DMRS association & Second PTRS-DMRS association)

(5-1) The existing method may set the number of bits to 0, 2, or 4 depending on various conditions. Characteristically, if the UL waveform configured/indicated via higher layer signaling is DFT-s-OFDM or if the max rank is 1, the field size is 0 bit. In addition, if the dynamic waveform switching is configured, it may be configured so that the field size is always fixed to 0 bit, an association method for a case where the base station dynamically configures the UL waveform as CP-OFDM may be configured/indicated via higher layer signaling, and the field size may be pre-fixed to a specific value.

(5-2) Alternatively, if the bit-width of the field varies for each UL waveform, it may be configured so that the bit-width of the field is determined as a maximum value among possible bit-widths.

The present disclosure proposes a method of determining the bit-width of the field as a maximum value among bit-widths, that can be included when the bit-width of the field varies for each UL waveform, among the above-mentioned configuration methods. In this case, when a UL waveform requiring only a relatively small bit-width is dynamically configured/indicated, the UE may be configured to interpret only the necessary number of bits from the MSB (or from the LSB) when interpreting the field. (That is, the unnecessary bits from the LSB (or from the MSB) are configured to be ignored.)

If each field size is configured to vary as the waveform dynamically changes, the field size may be determined using one of the following alternative methods.

(1) Alt 1: A method of comparing a field size when the UL waveform for each field is CP-OFDM and a field size when the UL waveform for each field is DFT-s-OFDM and determining a size of each field using the larger value of the two

(2) Alt 2: A method of comparing an entire field size (or adding a specific number of multiple fields) when the UL waveform is CP-OFDM and an entire field size (or adding a specific number of multiple fields) when the UL waveform is DFT-s-OFDM and determining an entire DCI field size (or a size adding a specific number of multiple fields) using the larger value of the two

(2-1) For example, considering fields A and B are grouped, when each field size when the UL waveform is configured/indicated as DFT-s-OFDM is a1/b1, and each field size when the UL waveform is configured/indicated as CP-OFDM is a2/b2, a sum of the two field sizes may be defined as max{a1+b1, a2+b2}.

As another method, it may be considered that the DCI handling and/or UE interpretation method that has been previously applied to BWP switching is also applied to when the base station and the UE configures/indicates the dynamic waveform switching. That is, in a situation where a size of a specific field X is A bit when it is a specific waveform 1 (e.g., CP-OFDM) and is B bit when it is a specific waveform 2 (e.g., DFT-s-OFDM), if the base station dynamically indicates switching from the waveform 1 to the waveform 2 via DCI, the base station may indicate information related to the waveform 2 in a state where the size of the field X within the DCI is A bit.

In this instance, if A > B, the UE may be configured to read only the first (MSB) B bits within the field X and interpret/apply them as the waveform 2 information. Conversely, if A < B, the UE may be configured to add '0' as many as B-A bits to a front of the A bits indicated by the field X and interpret/apply it as B-bit information related to the waveform 2.

In addition, enabling/disabling operation for the dynamic waveform switching may be independently configured for each BWP. For example, the dynamic waveform switching may be enabled in a first active UL BWP, and the dynamic waveform switching may be disabled in a second active UL BWP. As a result, in the first active UL BWP, the base station can dynamically configure/indicate the UL waveform. On the other hand, in the second active UL BWP, the base station cannot dynamically configure/indicate the UL waveform and may configure/indicate the UL waveform using an existing method (i.e., a method of semi-statically configuring via higher layer signaling).

For this operation, a higher layer parameter representing whether the dynamic waveform switching is enabled or disabled may be configured to be independently provided for each UL BWP (i.e., the higher layer parameter is generated/indicated as many times as the number of UL BWPs set by the base station). Characteristically, if the base station does not transmit the higher layer parameter for a specific UL BWP or transmits the higher layer parameter with it left blank, the UE may be configured/defined to determine whether to enable/disable the dynamic waveform switching in the corresponding UL BWP based on information (i.e., one of enable/disable) set by the higher layer parameter provided to an initial UL BWP.

A specific DCI format (e.g., DCI format 0_2, etc.) is defined so that the base station can individually configure the sizes of respective fields constituting the DCI. For this reason, if an explicit N-bit (e.g., N=1) DCI field is introduced (to the specific DCI format (e.g., DCI format 0_2, etc.)) for the dynamic waveform switching, a method may be considered in which the base station configures/defines (individually for each waveform) the size of a specific (same) DCI field to have different (or same) values depending on different waveforms. Afterwards, the UE may be configured to calculate/interpret the size of the specific DCI field suitably for a waveform configured/indicated through the explicit N-bit DCI field based on information configured/defined by the base station, and receive (monitor) the DCI based on this.

When the proposed method is applied, the base station configures/indicates differently (or equally) each field size based on different waveforms. Hence, even if different waveforms are configured/indicated, the total size of the specific DCI format can be made equal (or similar). As a result, since the total DCI size is equal/similar even when different waveforms are applied, there is an advantage in that the UE does not have to additionally perform the new operation proposed above. In addition, there is an advantage in that the DCI overhead can be reduced by reducing a difference in a DCI payload size required between different waveforms.

A specific configuration method is proposed as follows. First, a method is to configure/define (individually for each waveform) respective sizes of all DCI fields (that can be configured by the base station) forming a specific DCI format (e.g., DCI format 0_2) to have independent (e.g., different or the same) sizes based on different waveforms. That is, the base station may configure/indicate respective sizes of all the DCI fields of DCI format 0_2 (that can be configured by the base station) to have independent (e.g., different or the same) values based on different waveforms via higher layer signaling (e.g., UE specific RRC signaling). Then, the UE may be configured to receive the corresponding information (the size of each DCI field corresponding to each waveform) and select/interpret the appropriate DCI field size (set to the indicated waveform) depending on which waveform is dynamically indicated from the base station to receive (monitor) the corresponding DCI. Characteristically, because different sizes can be set/indicated for all the DCI fields, an amount of information provided by the base station can be large.

Second, a method is to configure/define (individually for each waveform) sizes of specific some DCI fields of DCI fields (that can be configured by the base station) forming a specific DCI format (e.g., DCI format 0_2) to have independent (e.g., different or the same) sizes based on different waveforms, and to equally configure/define sizes of remaining DCI fields (e.g., commonly used for two waveforms) regardless of the waveform. That is, the base station may configure/indicate (individually for each waveform) sizes of specific some DCI fields of DCI format 0_2 to have independent (e.g., different or the same) values based on different waveforms via higher layer signaling (e.g., UE specific RRC signaling), and may configure/define sizes of remaining DCI fields to have the same value regardless of the waveform. Then, the UE may be configured to receive the corresponding information (a size for each DCI field individually set to each waveform and/or a size for each DCI field equally set regardless of the waveform) and select/interpret the appropriate DCI field size (set to the indicated waveform) depending on which waveform is dynamically indicated from the base station to receive (monitor) the corresponding DCI.

**Method of pre-configuring/pre-indicating waveform to value indicated by specific DCI field**

As in the method proposed above, the base station may dynamically configure/indicate a waveform using specific fields of DCI format 0_0, 0_1, 0_2 for scheduling PUSCH. However, a method of configuring/indicating a specific waveform to a higher layer signaling value or table referenced by an existing defined DCI field value may also be considered.

In a first method, a specific UL waveform may be additionally configured/indicated to information corresponding to each time domain resource assignment (TDRA) field value configured/indicated by the base station via higher layer signaling. That is, the base station provides k2, mappingType, and startSymbolAndLength information corresponding to each TDRA field value via higher layer signaling, and may additionally configure/indicate a UL waveform. Characteristically, a default UL waveform may be configured, and if a UL waveform value is not separately provided, it may be configured to follow the default UL waveform. The default UL waveform may be a value that is cell-commonly configured, BWP-specifically configured, or separately configured/indicated by the base station via higher layer signaling.

In a second method, a method of pre-defining UL waveform values to a specific MCS table may be considered. For example, when a specific MCS table is newly configured, it may be configured that a specific index additionally specifies UL waveform A (e.g., CP-OFDM) and another specific index additionally specifies UL waveform B (e.g., DFT-s-OFDM).

As another method, a method of pre-dividing HARQ process number field values into two groups and pre-pairing UL waveforms for each group may be considered. For example, if a HARQ process number field is X bits and there are a total of $2^X$ HARQ IDs, K (e.g., 0 to K-1) HARQ IDs may be defined to use the UL waveform A (e.g., CP-OFDM), and $2^X$-K (e.g., K to $2^X$-1) HARQ IDs may be defined to use the UL waveform B (e.g., DFT-s-OFDM). The UE may operate to transmit the PUSCH using the pre-defined UL waveform based on a value of the HARQ process number field.

As another method, a method of mapping UL waveforms based on information corresponding to each index of a TDRA table (i.e., based on a result of resource mapping) may be considered. For example, the UL waveform to be used may be pre-configured/pre-defined based on how many OFDM symbols have been allocated depending on startSymbolAndLength (i.e., SLIV) value, and/or whether a mapping type is type A or type B, and/or the k2 value (or based on a combination of the above values). The UE can know the UL waveform to be used in advance depending on how TDRA information is configured/indicated/combined. If the base station actually sets a TDRA value through a DCI field, the UE may be configured to transmit the PUSCH using the UL waveform corresponding to it.

As another method, it is possible to consider a method in which different UL waveforms are used based on the number of PRBs configured/indicated through a FDRA field and/or a code rate value configured/indicated through a MCS field. For example, if PRBs less than or equal to a specific number (pre-defined or configured/indicated by the base station) are allocated and/or an MCS index less than or equal to a specific code rate is set, waveform A (e.g., DFT-s-OFDM) may be configured to be used. On the contrary, if PRBs greater than or equal to the specific number are allocated and/or an MCS index greater than or equal to the specific code rate is set, waveform B (e.g., CP-OFDM) may be configured to be used. The UE may check a setting value of the FDRA field and/or a setting value of the MCS field (or a combination of the above field values) and transmit the PUSCH using the UL waveform corresponding to it.

**Method of indicating through aggregation level and CCE index**

Additionally, it may be considered to dynamically configure/indicate a UL waveform using an aggregation level value and/or a CCE index value of PDCCH on which a UL grant is transmitted, not dynamically setting/indicating a waveform through a DCI field. That is, if the UL waveform is pre-paired with the aggregation level values (or the CCE index values) and the base station uses a specific aggregation level (or a specific CCE index value), the UE may interpret that the paired UL waveform is configured/indicated. For example, if the aggregation levels 1, 2, and 4 are used, it may be defined so that the waveform A (e.g., CP-OFDM) is used, and if the aggregation levels 8 and 16 are used, it may be defined so that the waveform B (e.g., DFT-S-OFDM) is used. For another example, if the (lowest or highest) CCE index is greater than or equal to K or the (lowest or highest) CCE index is an even number, it may be defined so that the waveform A (e.g., CP-OFDM) is used, and if the (lowest or highest) CCE index is less than K or the (lowest or highest) CCE index is an odd number, it may be defined so that the waveform B (e.g., DFT-S-OFDM) is used.

**Method of determining whether to use dynamic waveform switching. by value of specific DCI field**

A method may be considered in which a base station informs a UE whether to use a dynamic waveform switching operation using a value of a specific DCI field. As a first method, whether to use the dynamic waveform switching operation may be determined based on a value of a HARQ process number field and whether it is an initial transmission/retransmission. For example, the dynamic waveform switching operation may not be used when the initial transmission is performed using a specific HARQ ID, and the dynamic waveform switching operation may be configured to be used when the retransmission is indicated using the same HARQ ID. The UE may interpret the DCI field by understanding that the dynamic waveform switching operation is not used when the initial transmission is performed using the specific HARQ ID, and may interpret the DCI field by understanding that the dynamic waveform switching operation is used when the retransmission is indicated using the same HARQ ID.

In this case, when the UL waveform is dynamically configured/indicated through a specific DCI field A (e.g., HARQ process number field, etc.), the UE may be configured to interpret by referring to the value/table set for the corresponding UL waveform value when interpreting a specific DCI field B (e.g., MCS field, etc.) based on the configured/indicated UL waveform value.

For another example, based on whether the UL waveform is DFT-s-OFDM or CP-OFDM, a combination of information indicated by a TDRA field value may be configured to vary. That is, a combination of {k2, mapping Type, startSymbolAndLength} indicated by the TDRA field value may vary depending on a DMRS structure suitable for different UL waveforms. Accordingly, if the UL waveform is DFT-s-OFDM, it may be configured to refer to Table X including a combination of information suitable for it, and if the UL waveform is CP-OFDM, it may be configured to refer to Table Y including a combination of information suitable for it.

Second, depending on a type of a UL waveform that the base station dynamically configures/indicates through a specific DCI field, the specific DCI field may be configured to be different. For example, if the UL waveform is configured/indicated as CP-OFDM, a MCS field may include X bits (e.g., X=5), and if the UL waveform is configured/indicated as DFT-s-OFDM, the MCS field may include Y bits (e.g., Y=4). Alternatively, if the UL waveform is configured/indicated as CP-OFDM, a HARQ process number field may include X bit (e.g., X=4), and if the UL waveform is configured/indicated as DFT-s-OFDM, the HARQ process number field may include Y bit (e.g., Y=2). In this case, when the UL waveform is dynamically configured/indicated through a specific DCI field A (e.g., HARQ process number field, etc.), the UE may be configured to interpret using a predefined DCI field size based on the corresponding UL waveform value when interpreting a specific DCI field B (e.g., MCS field, etc.) based on the configured/indicated UL waveform value.

In addition, the following DCI fields may also have different field configurations (e.g., field bit-width) depending on the UL waveform configured/indicated by the base station.

(1) SRI related: SRS resource set indicator and/or Second SRS resource indicator

(1-1) Even if the UL waveform configured/indicated by the base station varies, it is possible to consider a method of equally setting a bit-width of the field through restrictions, such as configuring/indicating to use either a non-codebook (NCB) based transmission or a codebook (CB) based transmission, or commonly configuring/indicating the number of SRS resources, or commonly configuring/indicating the number of max ranks.

(1-2) Alternatively, if the bit-width of the field varies for each UL waveform, it may be configured so that the bit-width of the field is determined as a maximum value among possible bit-widths.

(2) Transmit Precoding Matrix Indicator (TPMI) and Transmit Rank Indicator (TRI) related: Precoding information and number of layers & Second Precoding information

(2-1) If the bit-width of the field varies for each UL waveform, it may be configured so that the bit-width of the field is determined as a maximum value among possible bit-widths.

(3) Antenna ports field

(3-1) If the bit-width of the field varies for each UL waveform, it may be configured so that the bit-width of the field is determined as a maximum value among possible bit-widths.

(4) DMRS sequence initialization field

(4-1) When a method of configuring a waveform via existing higher layer signaling is applied, a field size is set to 0 bit if the waveform is configured as DFT-s-OFDM, and the field size is set to 1 bit if the waveform is configured as CP-OFDM. In addition, if dynamic waveform switching is configured, it may be configured so that the field size is always fixed to 1 bit, and it may be configured so that the UE determine whether or not to interpret the 1 bit based on the UL waveform that is actually dynamically configured/indicated. In other words, if the base station dynamically configures the UL waveform as DFT-s-OFDM, the UE may be configured to ignore the 1 bit field, and if the base station dynamically configures the UL waveform as CP-OFDM, the UE may be configured to interpret the 1 bit field without ignoring the 1 bit field.

(4-2) Alternatively, if the dynamic waveform switching is configured, it may be configured so that the field size is always fixed to 0 bit, an initialization method for a case where the base station dynamically configures the UL waveform as CP-OFDM may be configured/indicated via higher layer signaling, and the field size may be pre-fixed to a specific one value of 0 and 1.

(5) PTRS-DMRS related (PTRS-DMRS association & Second PTRS-DMRS association)

(5-1) The existing method may set the number of bits to 0, 2, or 4 depending on various conditions. Characteristically, if the UL waveform configured/indicated via higher layer signaling is DFT-s-OFDM or if the max rank is 1, the field size is 0 bit. In addition, if the dynamic waveform switching is configured, it may be configured so that the field size is always fixed to 0 bit, an association method for a case where the base station dynamically configures the UL waveform as CP-OFDM may be configured/indicated via higher layer signaling, and the field size may be pre-fixed to a specific value.

(5-2) Alternatively, if the bit-width of the field varies for each UL waveform, it may be configured so that the bit-width of the field is determined as a maximum value among possible bit-widths.

The present disclosure proposes a method of determining the bit-width of the field as a maximum value among bit-widths, that can be included when the bit-width of the field varies for each UL waveform, among the above-mentioned configuration methods. In this case, when a UL waveform requiring only a relatively small bit-width is dynamically configured/indicated, the UE may be configured to interpret only the necessary number of bits from the MSB (or from the LSB) when interpreting the field. (That is, the unnecessary bits from the LSB (or from the MSB) are configured to be ignored.)

If each field size is configured to vary as the waveform dynamically changes, the field size may be determined using one of the following alternative methods.

(1) Alt 1: A method of comparing a field size when the UL waveform for each field is CP-OFDM with a field size when the UL waveform for each field is DFT-s-OFDM and determining a size of each field using the larger value of the two

(2) Alt 2: A method of comparing an entire field size (or adding a specific number of multiple fields) when the UL waveform is CP-OFDM with an entire field size (or adding a specific number of multiple fields) when the UL waveform is DFT-s-OFDM and determining an entire DCI field size (or a size adding a specific number of multiple fields) using the larger value of the two

(2-1) For example, considering fields A and B are grouped, when each field size when the UL waveform is configured/indicated as DFT-s-OFDM is a1/b1, and each field size when the UL waveform is configured/indicated as CP-OFDM is a2/b2, a sum of the two field sizes may be defined as max{a1+b1, a2+b2}.

As another method, it may be considered that the DCI handling and/or UE interpretation method that has been previously applied to BWP switching is also applied to when the base station and the UE configures/indicates the dynamic waveform switching. That is, in a situation where a size of a specific field X is A bit when it is a specific waveform 1 (e.g., CP-OFDM) and is B bit when it is a specific waveform 2 (e.g., DFT-s-OFDM), if the base station dynamically indicates switching from the waveform 1 to the waveform 2 via DCI, the base station may indicate information related to the waveform 2 in a state where the size of the field X within the DCI is A bit.

In this instance, if A > B, the UE may be configured to read only the first (MSB) B bits within the field X and interpret/apply them as the waveform 2 information. Conversely, if A < B, the UE may be configured to add '0' as many as B-A bits to a front of the A bits indicated by the field X and interpret/apply it as B-bit information related to the waveform 2.

In addition, enabling/disabling operation for the dynamic waveform switching may be independently configured for each BWP. For example, the dynamic waveform switching may be enabled in a first active UL BWP, and the dynamic waveform switching may be disabled in a second active UL BWP. As a result, in the first active UL BWP, the base station can dynamically configure/indicate the UL waveform. On the other hand, in the second active UL BWP, the base station cannot dynamically configure/indicate the UL waveform and may configure/indicate the UL waveform using an existing method (i.e., a method of semi-statically configuring via higher layer signaling).

For this operation, a higher layer parameter representing whether the dynamic waveform switching is enabled or disabled may be configured to be independently provided for each UL BWP (i.e., the higher layer parameter is generated/indicated as many times as the number of UL BWPs set by the base station). Characteristically, if the base station does not transmit the higher layer parameter for a specific UL BWP or transmits the higher layer parameter with it left blank, the UE may be configured/defined to determine whether to enable/disable the dynamic waveform switching in the corresponding UL BWP based on information (i.e., one of enable/disable) set by the higher layer parameter provided to an initial UL BWP.

A specific DCI format (e.g., DCI format 0_2, etc.) is defined so that the base station can individually configure the sizes of respective fields constituting the DCI. For this reason, if an explicit N-bit (e.g., N=1) DCI field is introduced (to the specific DCI format (e.g., DCI format 0_2, etc.)) for the dynamic waveform switching, a method may be considered in which the base station configures/defines (individually for each waveform) the size of a specific (same) DCI field to have different (or same) values depending on different waveforms. Afterwards, the UE may be configured to calculate/interpret the size of the specific DCI field suitably for a waveform configured/indicated through the explicit N-bit DCI field based on information configured/defined by the base station, and receive (monitor) the DCI based on this.

When the proposed method is applied, the base station configures/indicates differently (or equally) each field size based on different waveforms. Hence, even if different waveforms are configured/indicated, the total size of the specific DCI format can be made equal (or similar). As a result, since the total DCI size is equal/similar even when different waveforms are applied, there is an advantage in that the UE does not have to additionally perform the new operation proposed above. In addition, there is an advantage in that the DCI overhead can be reduced by reducing a difference in a DCI payload size required between different waveforms.

A specific configuration method is proposed as follows. First, a method is to configure/define (individually for each waveform) respective sizes of all DCI fields (that can be configured by the base station) forming a specific DCI format (e.g., DCI format 0_2) to have independent (e.g., different or the same) sizes based on different waveforms. That is, the base station may configure/indicate respective sizes of all the DCI fields of DCI format 0_2 (that can be configured by the base station) to have independent (e.g., different or the same) values based on different waveforms via higher layer signaling (e.g., UE specific RRC signaling). Then, the UE may be configured to receive the corresponding information (the size of each DCI field corresponding to each waveform) and select/interpret the appropriate DCI field size (set to the indicated waveform) depending on which waveform is dynamically indicated from the base station to receive (monitor) the corresponding DCI. Characteristically, because different sizes can be set/indicated for all the DCI fields, an amount of information provided by the base station can be large.

Second, a method is to configure/define (individually for each waveform) sizes of specific some DCI fields of DCI fields (that can be configured by the base station) forming a specific DCI format (e.g., DCI format 0_2) to have independent (e.g., different or the same) sizes based on different waveforms, and to equally configure/define sizes of remaining DCI fields (e.g., commonly used for two waveforms) regardless of the waveform. That is, the base station may configure/indicate (individually for each waveform) sizes of specific some DCI fields of DCI format 0_2 to have independent (e.g., different or the same) values based on different waveforms via higher layer signaling (e.g., UE specific RRC signaling), and may configure/define sizes of remaining DCI fields to have the same value regardless of the waveform. Then, the UE may be configured to receive the corresponding information (a size for each DCI field individually set to each waveform and/or a size for each DCI field equally set regardless of the waveform) and select/interpret the appropriate DCI field size (set to the indicated waveform) depending on which waveform is dynamically indicated from the base station to receive (monitor) the corresponding DCI.

### Method of pre-configuring/pre-indicating waveform to value indicated by specific DCI field

As in the method proposed above, the base station may dynamically configure/indicate a waveform using specific fields of DCI format 0_0, 0_1, 0_2 for scheduling PUSCH. However, a method of configuring/indicating a specific waveform to a higher layer signaling value or table referenced by an existing defined DCI field value may also be considered.

In a first method, a specific UL waveform may be additionally configured/indicated to information corresponding to each time domain resource assignment (TDRA) field value configured/indicated by the base station via higher layer signaling. That is, the base station provides k2, mappingType, and startSymbolAndLength information corresponding to each TDRA field value via higher layer signaling, and may additionally configure/indicate a UL waveform. Characteristically, a default UL waveform may be configured, and if a UL waveform value is not separately provided, it may be configured to follow the default UL waveform. The default UL waveform may be a value that is cell-commonly configured, BWP-specifically configured, or separately configured/indicated by the base station via higher layer signaling.

In a second method, a method of pre-defining UL waveform values to a specific MCS table may be considered. For example, when a specific MCS table is newly configured, it may be configured that a specific index additionally specifies UL waveform A (e.g., CP-OFDM) and another specific index additionally specifies UL waveform B (e.g., DFT-s-OFDM).

As another method, a method of pre-dividing HARQ process number field values into two groups and pre-pairing UL waveforms for each group may be considered. For example, if a HARQ process number field is X bits and there are a total of $2^X$ HARQ IDs, K (e.g., 0 to K-1) HARQ IDs may be defined to use the UL waveform A (e.g., CP-OFDM), and $2^X$-K (e.g., K to $2^X$-1) HARQ IDs may be defined to use the UL waveform B (e.g., DFT-s-OFDM). The UE may operate to transmit the PUSCH using the pre-defined UL waveform based on a value of the HARQ process number field.

As another method, a method of mapping UL waveforms based on information corresponding to each index of a TDRA table (i.e., based on a result of resource mapping) may be considered. For example, the UL waveform to be used may be pre-configured/pre-defined based on how many OFDM symbols have been allocated depending on startSymbolAndLength (i.e., SLIV) value, and/or whether a mapping type is type A or type B, and/or the k2 value (or based on a combination of the above values). The UE can know the UL waveform to be used in advance depending on how TDRA information is configured/indicated/combined. If the base station actually sets a TDRA value through a DCI field, the UE may be configured to transmit the PUSCH using the UL waveform corresponding to it.

As another method, it is possible to consider a method in which different UL waveforms are used based on the number of PRBs configured/indicated through a FDRA field and/or a code rate value configured/indicated through a MCS field. For example, if PRBs less than or equal to a specific number (pre-defined or configured/indicated by the base station) are allocated and/or an MCS index less than or equal to a specific code rate is set, waveform A (e.g., DFT-s-OFDM) may be configured to be used. On the contrary, if PRBs greater than or equal to the specific number are allocated and/or an MCS index greater than or equal to the specific code rate is set, waveform B (e.g., CP-OFDM) may be configured to be used. The UE may check a setting value of the FDRA field and/or a setting value of the MCS field (or a combination of the above field values) and transmit the PUSCH using the UL waveform corresponding to it.

## Method of indicating through aggregation level and CCE index

Additionally, it may be considered to dynamically configure/indicate a UL waveform using an aggregation level value and/or a CCE index value of PDCCH on which a UL grant is transmitted, not dynamically setting/indicating a waveform through a DCI field. That is, if the UL waveform is pre-paired with the aggregation level values (or the CCE index values) and the base station uses a specific aggregation level (or a specific CCE index value), the UE may interpret that the paired UL waveform is configured/indicated. For example, if the aggregation levels 1, 2, and 4 are used, it may be defined so that the waveform A (e.g., CP-OFDM) is used, and if the aggregation levels 8 and 16 are used, it may be defined so that the waveform B (e.g., DFT-S-OFDM) is used. For another example, if the (lowest or highest) CCE index is greater than or equal to K or the (lowest or highest) CCE index is an even number, it may be defined so that the waveform A (e.g., CP-OFDM) is used, and if the (lowest or highest) CCE index is less than K or the (lowest or highest) CCE index is an odd number, it may be defined so that the waveform B (e.g., DFT-S-OFDM) is used.

## Method of determining whether to use dynamic waveform switching. **by value of specific DCI field**

A method may be considered in which a base station informs a UE whether to use a dynamic waveform switching operation using a value of a specific DCI field. As a first method, whether to use the dynamic waveform switching operation may be determined based on a value of a HARQ process number field and whether it is an initial transmission/retransmission. For example, the dynamic waveform switching operation may not be used when the initial transmission is performed using a specific HARQ ID, and the dynamic waveform switching operation may be configured to be used when the retransmission is indicated using the same HARQ ID. The UE may interpret the DCI field by understanding that the dynamic waveform switching operation is not used when the initial transmission is performed using the specific HARQ ID, and may interpret the DCI field by understanding that the dynamic waveform switching operation is used when the retransmission is indicated using the same HARQ ID.

As another method, whether to use the dynamic waveform switching operation may be determined based on the HARQ process number field value. For example, if the HARQ process number field is X bits and there are a total of $2^X$ HARQ IDs, K (e.g., 0 to K-1) HARQ IDs may be configured not to allow the dynamic waveform switching operation, and $2^X$-K (e.g., K to $2^X$-1) HARQ IDs may be configured to allow the dynamic waveform switching operation. If the HARQ ID in which the dynamic waveform switching operation is allowed is configured/indicated when configured as above, it may be configured that the UE determines which waveform of UL waveform A (e.g., CP-OFDM) or UL waveform B (e.g., DTS-s-OFDM) has been used based on a configuration/indication of another DCI field, and uses it for PUSCH transmission.

The proposed method can be configured/applied to other UL signals/channels such as MSG3 PUSCH, MSGA preamble/PUSCH and/or PUSCH/PUCCH. In addition, since examples of the proposed method described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) can be defined as a rule so that the base station notifies the UE of the information via a predefined signal (e.g., a physical layer signal or a higher layer signal). For example, the higher layer may include one or more of functional layers such as MAC, RLC, PDCP, RRC, and SDAP.

**[Description of claims related to UE]**

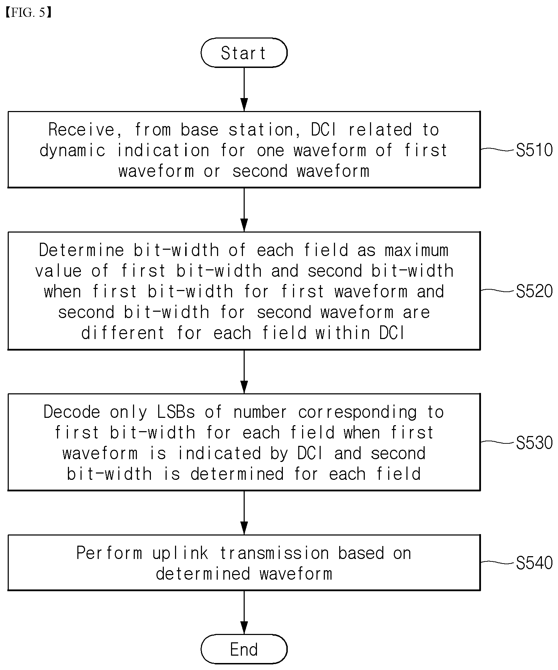

Below, the above-described embodiments are described in detail from a perspective of an operation of a UE with reference to FIG. 5. Methods to be described below are merely distinguished for convenience of explanation. Thus, as long as the methods are not mutually exclusive, it is obvious that partial configuration of any method can be substituted or combined with partial configuration of another method.

FIG. 5 illustrates an example of an operation process of a UE in a system applicable to the present disclosure.

In step S510, a UE receives, from a base station (BS), downlink control information (DCI) related to a dynamic indication for one waveform of a first waveform or a second waveform.

In step S520, based on a first bit-width for the first waveform and a second bit-width for the second waveform being different for each field within the DCI, the UE determines a bit-width of each field as a maximum value of the first bit-width and the second bit-width.

In step S530, based on the first waveform being indicated by the DCI and the second bit-width being determined for each field, the UE decodes only least significant bits (LSBs) of a number corresponding to the first bit-width for each field.

In step S540, the UE performs an uplink transmission based on the determined waveform.

According to various embodiments of the present disclosure, the operation process may further comprise: based on the first waveform being indicated by the DCI, the second bit-width being determined for each field, and the number corresponding to the first bit-width being 0, ignoring each field.

According to various embodiments of the present disclosure, the DCI may be related to DCI format 0_1 or DCI format 0_2.

According to various embodiments of the present disclosure, the first waveform may be a cyclic prefix-orthogonal frequency division multiplexing (CP-OFDM), and the second waveform is a discrete Fourier transform-spread-orthogonal frequency division multiplexing (DFT-s-OFDM). Alternatively, the first waveform may be the DFT-s-OFDM, and the second waveform is the CP-OFDM.

According to various embodiments of the present disclosure, the operation process may further comprise: for all fields within the DCI, based on a third bit-width which is a total sum of bit-widths of all the fields for the first waveform being different from a fourth bit-width which is a total sum of bit-widths of all the fields for the second waveform, determining a bit-width of all the fields as a maximum value of the third bit-width and the fourth bit-width.

According to various embodiments of the present disclosure, (i) based on the first bit-width for the first waveform and the second bit-width for the second waveform being different for each field within the DCI, and (ii) based on, after the first waveform is indicated by the DCI and the first bit-width is applied to each field within the DCI, a second DCI indicating a waveform switching to the second waveform being received: each field within the second DCI may be configured to allow information related to the second waveform to be decoded based on the first bit-width.

According to various embodiments of the present disclosure, the operation process may further comprise: based on the first bit-width being greater than the second bit-width, decoding only most significant bits (MSBs) of a number corresponding to the second bit-width for each field within the second DCI; and based on the first bit-width being less than the second bit-width, decoding each field within the second DCI by adding a number of '0' s, corresponding to a difference between the first bit width and the second bit width, to a front of each field within the second DCI.

According to various embodiments of the present disclosure, there is provided a user equipment (UE) in a wireless communication system. The UE may include a transceiver and at least one processor, and the at least one processor may be configured to perform the operation method of the UE based on FIG. 5.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 5 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 5.

**[Description of claims related to BS]**

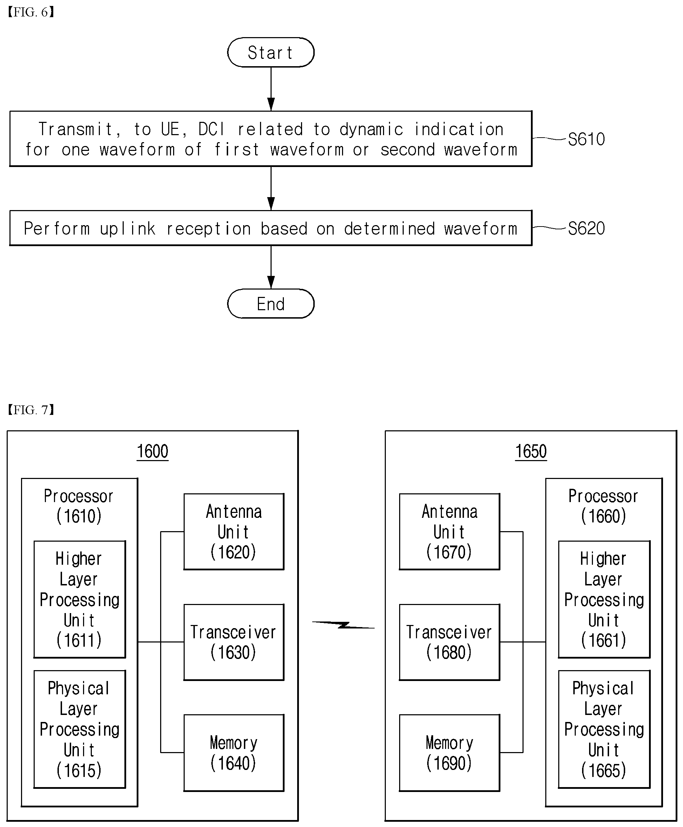

Below, the above-described embodiments are described in detail from a perspective of an operation of a base station with reference to FIG. 6. Methods to be described below are merely distinguished for convenience of explanation. Thus, as long as the methods are not mutually exclusive, it is obvious that partial configuration of any method can be substituted or combined with partial configuration of another method.

FIG. 6 illustrates an example of an operation process of a base station in a system applicable to the present disclosure.

In step S610, a base station transmits, to a user equipment (UE), downlink control information (DCI) related to a dynamic indication for one waveform of a first waveform or a second waveform. Based on a first bit-width for the first waveform and a second bit-width for the second waveform being different for each field within the DCI, a bit-width of each field is determined as a maximum value of the first bit-width and the second bit-width. Based on the first waveform being indicated by the DCI and the second bit-width being determined for each field, only least significant bits (LSBs) of a number corresponding to the first bit-width for each field are decoded.

In step S620, the base station performs an uplink reception based on the determined waveform.

According to various embodiments of the present disclosure, based on the first waveform being indicated by the DCI, the second bit-width being determined for each field, and the number corresponding to the first bit-width being 0: each field may be ignored.

According to various embodiments of the present disclosure, the DCI may be related to DCI format 0_1 or DCI format 0_2.

According to various embodiments of the present disclosure, the first waveform may be a cyclic prefix-orthogonal frequency division multiplexing (CP-OFDM), and the second waveform is a discrete Fourier transform-spread-orthogonal frequency division multiplexing (DFT-s-OFDM). Alternatively, the first waveform is the DFT-s-OFDM, and the second waveform is the CP-OFDM.

According to various embodiments of the present disclosure, for all fields within the DCI, based on a third bit-width which is a total sum of bit-widths of all the fields for the first waveform being different from a fourth bit-width which is a total sum of bit-widths of all the fields for the second waveform, a bit-width of all the fields may be determined as a maximum value of the third bit-width and the fourth bit-width.

According to various embodiments of the present disclosure, (i) based on the first bit-width for the first waveform and the second bit-width for the second waveform being different for each field within the DCI, and (ii) based on, after the first waveform is indicated by the DCI and the first bit-width is applied to each field within the DCI, a second DCI indicating a waveform switching to the second waveform being transmitted: each field within the second DCI may be configured to allow information related to the second waveform to be decoded based on the first bit-width.

According to various embodiments of the present disclosure, based on the first bit-width being greater than the second bit-width, only most significant bits (MSBs) of a number corresponding to the second bit-width for each field within the DCI may be decoded. And, based on the first bit-width being less than the second bit-width, each field within the second DCI may be decoded by adding a number of '0's, corresponding to a difference between the first bit width and the second bit width, to a front of each field within the second DCI.

According to various embodiments of the present disclosure, there is provided a base station in a wireless communication system. The base station may include a transceiver and at least one processor, and the at least one processor may be configured to perform the operation method of the BS based on FIG. 6.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 6 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 6.

## Wireless device applicable to the present disclosure

Examples of wireless devices to which various embodiments of the present disclosure are applied are described below.

FIG. 7 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a user equipment (UE) in a wireless communication system, the method comprising:

   receiving, from a base station (BS), downlink control information (DCI) related to a dynamic indication for one waveform of a first waveform or a second waveform;
   based on a first bit-width for the first waveform and a second bit-width for the second waveform being different for each field within the DCI, determining a bit-width of each field as a maximum value of the first bit-width and the second bit-width;
   based on the first waveform being indicated by the DCI and the second bit-width being determined for each field, decoding only least significant bits (LSBs) of a number corresponding to the first bit-width for each field; and
   performing an uplink transmission based on the determined waveform.

2. The method of claim 1, further comprising, based on the first waveform being indicated by the DCI, the second bit-width being determined for each field, and the number corresponding to the first bit-width being 0, ignoring each field.

3. The method of claim 1, wherein the DCI is related to DCI format 0_1 or DCI format 0_2.

4. The method of claim 1, wherein the first waveform is a cyclic prefix-orthogonal frequency division multiplexing (CP-OFDM), and the second waveform is a discrete Fourier transform-spread-orthogonal frequency division multiplexing (DFT-s-OFDM), or

wherein the first waveform is the DFT-s-OFDM, and the second waveform is the CP-OFDM.

5. The method of claim 1, further comprising, for all fields within the DCI, based on a third bit-width which is a total sum of bit-widths of all the fields for the first waveform being different from a fourth bit-width which is a total sum of bit-widths of all the fields for the second waveform, determining a bit-width of all the fields as a maximum value of the third bit-width and the fourth bit-width.

6. The method of claim 1, wherein based on the first bit-width for the first waveform and the second bit-width for the second waveform being different for each field within the DCI, and

   based on, after the first waveform is indicated by the DCI and the first bit-width is applied to each field within the DCI, a second DCI indicating a waveform switching to the second waveform being received,
   each field within the second DCI is configured to allow information related to the second waveform to be decoded based on the first bit-width.

7. The method of claim 6, further comprising:

   based on the first bit-width being greater than the second bit-width, decoding only most significant bits (MSBs) of a number corresponding to the second bit-width for each field within the second DCI; and
   based on the first bit-width being less than the second bit-width, decoding each field within the second DCI by adding a number of '0's, corresponding to a difference between the first bit width and the second bit width, to a front of each field within the second DCI.

8. A method of operating a base station (BS) in a wireless communication system, the method comprising:

   transmitting, to a user equipment (UE), downlink control information (DCI) related to a dynamic indication for one waveform of a first waveform or a second waveform,
   wherein based on a first bit-width for the first waveform and a second bit-width for the second waveform being different for each field within the DCI, a bit-width of each field is determined as a maximum value of the first bit-width and the second bit-width,
   wherein based on the first waveform being indicated by the DCI and the second bit-width being determined for each field, only least significant bits (LSBs) of a number corresponding to the first bit-width for each field are decoded; and
   performing an uplink reception based on the determined waveform.

9. The method of claim 8, wherein based on the first waveform being indicated by the DCI, the second bit-width being determined for each field, and the number corresponding to the first bit-width being 0, each field is ignored.

10. The method of claim 8, wherein the DCI is related to DCI format 0_1 or DCI format 0_2.

11. The method of claim 8, wherein the first waveform is a cyclic prefix-orthogonal frequency division multiplexing (CP-OFDM), and the second waveform is a discrete Fourier transform-spread-orthogonal frequency division multiplexing (DFT-s-OFDM), or
    wherein the first waveform is the DFT-s-OFDM, and the second waveform is the CP-OFDM.

12. The method of claim 8, wherein for all fields within the DCI, based on a third bit-width which is a total sum of bit-widths of all the fields for the first waveform being different from a fourth bit-width which is a total sum of bit-widths of all the fields for the second waveform, a bit-width of all the fields is determined as a maximum value of the third bit-width and the fourth bit-width.

13. The method of claim 8, wherein based on the first bit-width for the first waveform and the second bit-width for the second waveform being different for each field within the DCI, and

    based on, after the first waveform is indicated by the DCI and the first bit-width is applied to each field within the DCI, a second DCI indicating a waveform switching to the second waveform being transmitted,
    each field within the second DCI is configured to allow information related to the second waveform to be decoded based on the first bit-width.

14. The method of claim 13, wherein based on the first bit-width being greater than the second bit-width, only most significant bits (MSBs) of a number corresponding to the second bit-width for each field within the DCI are decoded, and
wherein based on the first bit-width being less than the second bit-width, each field within the second DCI is decoded by adding a number of '0's, corresponding to a difference between the first bit width and the second bit width, to a front of each field within the second DCI.

15. A user equipment (UE) in a wireless communication system, the UE comprising:

a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:

a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling a user equipment in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

【FIG. 1】

INITIAL CELL SEARCH — PSS-SSS& [DLRS]& PBCH — S11

SYSTEM INFORMATION RECEPTION — PDCCH/ PDSCH (BCCH) — S12

RANDOM ACCESS PROCEDURE — PRACH (S13) / PDCCH/ PDSCH (S14) / PUSCH (S15) / PDCCH/ PDSCH (S16)

GENERAL DL/UL Tx/Rx — PDCCH/ PDSCH (S17) / PUSCH/ PUCCH (S18)

· DL/UL ACK/NACK
· UE CQI/PMI RI REPORT
  USING PUSCH AND PUCCH

【FIG. 2】

【FIG. 3】

Resource grid

A carrier
(up to 3300
subcarriers,
i.e.,275 RBs)

A BWP

1RB=12
subcarriers

1 RE

1 subcarrier

1 symbol

l=0 · · ·

k=0

【FIG. 4】

DL control region

DL data or UL data region

UL control region

1 slot

【FIG. 5】

Start

Receive, from base station, DCI related to dynamic indication for one waveform of first waveform or second waveform ——S510

Determine bit-width of each field as maximum value of first bit-width and second bit-width when first bit-width for first waveform and second bit-width for second waveform are different for each field within DCI ——S520

Decode only LSBs of number corresponding to first bit-width for each field when first waveform is indicated by DCI and second bit-width is determined for each field ——S530

Perform uplink transmission based on determined waveform ——S540

End

【FIG. 6】

```
                    ( Start )
                         |
                         v
┌─────────────────────────────────────────────────────────┐
│ Transmit, to UE, DCI related to dynamic indication       │──S610
│ for one waveform of first waveform or second waveform    │
└─────────────────────────────────────────────────────────┘
                         |
                         v
┌─────────────────────────────────────────────────────────┐
│ Perform uplink reception based on determined waveform    │──S620
└─────────────────────────────────────────────────────────┘
                         |
                         v
                    ( End )
```

【FIG. 7】

```
┌─────────────────────────────────┐        ┌─────────────────────────────────┐
│              1600               │        │              1650               │
│ ┌─────────────┐  ┌───────────┐  │        │  ┌───────────┐  ┌─────────────┐ │
│ │ Processor   │  │ Antenna   │  │        │  │ Antenna   │  │ Processor   │ │
│ │ (1610)      │  │ Unit      │  │        │  │ Unit      │  │ (1660)      │ │
│ │             │  │ (1620)    │  │        │  │ (1670)    │  │             │ │
│ │ ┌─────────┐ │  └───────────┘  │        │  └───────────┘  │ ┌─────────┐ │ │
│ │ │ Higher  │ │                 │        │                 │ │ Higher  │ │ │
│ │ │ Layer   │ │                 │        │                 │ │ Layer   │ │ │
│ │ │Processing│ │ ┌───────────┐  │   ⚡   │  ┌───────────┐  │ │Processing│ │ │
│ │ │ Unit    │ │ │Transceiver│  │        │  │Transceiver│  │ │ Unit    │ │ │
│ │ │ (1611)  │ │ │ (1630)    │  │        │  │ (1680)    │  │ │ (1661)  │ │ │
│ │ └─────────┘ │ └───────────┘  │        │  └───────────┘  │ └─────────┘ │ │
│ │ ┌─────────┐ │                 │        │                 │ ┌─────────┐ │ │
│ │ │ Physical│ │                 │        │                 │ │ Physical│ │ │
│ │ │ Layer   │ │ ┌───────────┐  │        │  ┌───────────┐  │ │ Layer   │ │ │
│ │ │Processing│ │ │ Memory    │  │        │  │ Memory    │  │ │Processing│ │ │
│ │ │ Unit    │ │ │ (1640)    │  │        │  │ (1690)    │  │ │ Unit    │ │ │
│ │ │ (1615)  │ │ └───────────┘  │        │  └───────────┘  │ │ (1665)  │ │ │
│ │ └─────────┘ │                 │        │                 │ └─────────┘ │ │
│ └─────────────┘                 │        │                 └─────────────┘ │
└─────────────────────────────────┘        └─────────────────────────────────┘
```

## INTERNATIONAL SEARCH REPORT

| International application No. |
|---|
| **PCT/KR2023/014034** |

### A. CLASSIFICATION OF SUBJECT MATTER

**H04W 72/232**(2023.01)i; **H04L 27/26**(2006.01)i; **H04L 5/00**(2006.01)i; **H04W 72/23**(2023.01)i

According to International Patent Classification (IPC) or to both national classification and IPC

### B. FIELDS SEARCHED

Minimum documentation searched (classification system followed by classification symbols)

H04W 72/232(2023.01); H04L 1/00(2006.01); H04L 1/18(2006.01); H04L 27/26(2006.01); H04L 5/00(2006.01); H04W 16/28(2009.01); H04W 64/00(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 웨이브폼(waveform), 동적(dynamic), DCI, field, 비트 폭(bit width), LSB, DCI format 0_1, DCI format 0_2, CP-OFDM, DFT-s-OFDM, 스위칭(switching), MSB

### C. DOCUMENTS CONSIDERED TO BE RELEVANT

| Category* | Citation of document, with indication, where appropriate, of the relevant passages | Relevant to claim No. |
|---|---|---|
| A | EP 3621260 A1 (NTT DOCOMO, INC.) 11 March 2020 (2020-03-11)<br>See paragraphs [0056]-[0062]. | 1-20 |
| A | KR 10-2019-0073458 A (GUANGDONG OPPO MOBILE TELECOMMUNICATIONS CORP., LTD.) 26 June 2019 (2019-06-26)<br>See claims 1 and 14-15. | 1-20 |
| A | US 2022-0183012 A1 (T-MOBILE USA, INC.) 09 June 2022 (2022-06-09)<br>See paragraphs [0084]-[0109]; claims 1-2; and figures 4-7. | 1-20 |
| A | CN 113572587 A (HANGZHOU HONGLINGTONG INFORMATION TECHNOLOGY CO., LTD.) 29 October 2021 (2021-10-29)<br>See claims 1-7. | 1-20 |
| A | US 2022-0123856 A1 (QUALCOMM INCORPORATED) 21 April 2022 (2022-04-21)<br>See paragraphs [0184]-[0203]; and figures 12-15. | 1-20 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2024** | **04 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 598 224 A1

**INTERNATIONAL SEARCH REPORT**
Information on patent family members

International application No.

**PCT/KR2023/014034**

| Patent document cited in search report | | | Publication date (day/month/year) | Patent family member(s) | | | Publication date (day/month/year) |
|---|---|---|---|---|---|---|---|
| EP | 3621260 | A1 | 11 March 2020 | BR | 112019022797 | A2 | 26 May 2020 |
| | | | | CN | 110832815 | A | 21 February 2020 |
| | | | | EP | 3621260 | A4 | 02 December 2020 |
| | | | | IL | 270368 | A | 31 December 2019 |
| | | | | IL | 270368 | B | 01 September 2022 |
| | | | | JP | 6762424 | B2 | 30 September 2020 |
| | | | | SG | 11201910187 | A | 28 November 2019 |
| | | | | US | 2020-0154428 | A1 | 14 May 2020 |
| | | | | WO | 2018-203397 | A1 | 08 November 2018 |
| KR | 10-2019-0073458 | A | 26 June 2019 | AU | 2016-429280 | A1 | 30 May 2019 |
| | | | | AU | 2016-429280 | B2 | 27 January 2022 |
| | | | | BR | 112019009100 | A2 | 16 July 2019 |
| | | | | CA | 3043119 | A1 | 17 May 2018 |
| | | | | CA | 3043119 | C | 12 July 2022 |
| | | | | CL | 2019001281 | A1 | 26 July 2019 |
| | | | | CN | 109644172 | A | 16 April 2019 |
| | | | | CN | 109923907 | A | 21 June 2019 |
| | | | | CN | 109923907 | B | 06 September 2022 |
| | | | | EP | 3531755 | A1 | 28 August 2019 |
| | | | | EP | 3531755 | B1 | 01 September 2021 |
| | | | | IL | 266341 | A | 30 June 2019 |
| | | | | IL | 266341 | B | 01 April 2022 |
| | | | | IL | 266341 | D0 | 30 June 2019 |
| | | | | JP | 2020-502875 | A | 23 January 2020 |
| | | | | JP | 6932776 | B2 | 08 September 2021 |
| | | | | MX | 2019005424 | A | 10 July 2019 |
| | | | | PH | 12019501020 | A1 | 20 January 2020 |
| | | | | RU | 2727173 | C1 | 21 July 2020 |
| | | | | TW | 201818753 | A | 16 May 2018 |
| | | | | TW | I769186 | B | 01 July 2022 |
| | | | | US | 2020-0059905 | A1 | 20 February 2020 |
| | | | | WO | 2018-086016 | A1 | 17 May 2018 |
| | | | | WO | 2018-086147 | A1 | 17 May 2018 |
| | | | | ZA | 201903276 | B | 26 February 2020 |
| US | 2022-0183012 | A1 | 09 June 2022 | EP | 4012995 | A1 | 15 June 2022 |
| CN | 113572587 | A | 29 October 2021 | None | | | |
| US | 2022-0123856 | A1 | 21 April 2022 | US | 11658766 | B2 | 23 May 2023 |

Form PCT/ISA/210 (patent family annex) (July 2022)